# EUROPEAN PATENT SPECIFICATION

(11) **EP 1 393 622 B1**
(45) Date of publication and mention of the grant of the patent: **23.01.2008**
(21) Application number: 03018888.2
(22) Date of filing: 20.08.2003
(51) Int. Cl.: A01K 45/00

(54) **An apparatus for emptying poultry from transport crates**
Vorrichtung zum Entleeren von Geflügel aus Transportbehältern
Appareil pour vider des volailles de conteneurs de transport

(30) Priority: 29.08.2002 DK 200201264
(43) Date of publication of application: 03.03.2004
(73) Proprietor: Linco Food Systems A/S, 8380 Trige (DK)
(72) Inventor: Bach, Ole, 8400 Ebeltoft (DK)
(74) Representative: Gregersen, Niels Henrik

(56) References cited:
- EP-A- 0 533 288
- EP-A- 0 956 766
- WO-A-91/01632
- US-A- 4 355 939

## Description

### Field of the invention

The present invention relates to an apparatus for emptying poultry from transport crates and of the type specified in the introduction of claim 1.

### Background of the invention

Transport of live poultry from the poultry farmers to the poultry abattoirs is by special lorries adapted to contain a very large number of open transport crates. During transport, these crates are placed in purpose-built transport modules which in principle are chests of drawers, each having an upper cover surface forming a lid for the upper transport crate in each crate stack in that the other transport crates in the stack form lids for each other. Thus the transport crates are placed directly upon each other, each transport crate being capable of holding 15-30 birds.

Upon arrival at a poultry abattoir, the transport modules are unloaded from which the individual transport crates area transferred to an emptying system in that the individual transport crates, which are upwardly open, are moved to a first conveyor having an upper stationary cover plate so that the individual birds cannot escape the transport crates before the crates reach an emptying position where the transport crates manually or automatically are turned around in order to transfer the poultry to a suspension position.

Alternatively, the transport crates containing live poultry pass through a gas-filled tunnel for stunning and/or killing of the poultry that can subsequently be emptied manually or a automatically, e.g. according to the present invention.

US-A-4 355 939 discloses an apparatus for automatically handling palletized poultry coops containing live bird to empty the birds from the coops for hanging. A pallet loaded with tiers of poultry coops after removal from the livehaul truck is placed on a conveyor to move automatically to the input end of a coop infeed conveyor extending transverse to the pallet conveyor. Upon alignment of the pallet with the coop infeed conveyor, a limit switch stops the pallet conveyor and an extractor is actuated which pushes a tier of coops off the pallet and onto the coop infeed conveyor. The tier of coops is moved along to an unstacker comprising a lay-down unit having a rotor with coop support arms arranged in quadrature such that the coops are laid down on an inclined conveyor with each quarter of a revolution. The inclined conveyor moves each of the coops in succession to a dumping unit that empties the coop.

### Purpose of the invention

It is the object of the invention to provide an apparatus for emptying poultry, of the type specified in the introduction, and which makes it possible to automate the very heavy work of the actual unloading of the poultry from transport crates, while at the same time maintaining the necessary animal welfare.

### Brief description of the invention

The apparatus according to the invention is characterised in that said turning position comprises a turning unit in the form of two endless reversible conveyors located at a distance from each other, and being provided with mutually parallel conveyor members arranged for alternately forming a support surface and a cover surface for a transport crate, said turning unit as a whole being arranged for being turned around a rotational axis being perpendicular to the conveying direction of said conveyors. In a simple way it hereby becomes possible to automate the very heavy work of the actual unloading of live poultry from transport crates, while at the same time maintaining the necessary animal welfare.

Preferably, the apparatus according to the invention is provided with a stationary cover plate for transport crates being conveyed on the first mentioned conveyor while having their open sides turned upwards, and further being designed in such a way that the turning unit is arranged for first being rotated by 180° in one direction, and subsequently being rotated by 180° in the opposite direction.

Alternatively, the apparatus according to the invention can be designed in such a way that the turning unit is arranged for first being rotated by 180° in one direction, and subsequently being rotated by 180° in the same direction.

Alternatively, the apparatus according to the invention can be arranged for emptying of stunned poultry and/or killed poultry from transport crates, and may advantageously be designed in such a way that endless, reversible conveyors consist of belt conveyors having a number of rollers at a side turning away from said side of the conveyor which forms a support surface and a cover surface respectively for a transport crate.

A preferred embodiment of an apparatus according to the invention is designed in such a way that one of said subsequent conveyors opposite said emptying position is arranged for supporting opposite ends of the transport crates when these with their open sides turning downwards pass the emptying position so that the individual birds fall down on a conveyor that leads to a suspension position.

Alternatively, the apparatus according to the invention may be designed in such a way that one of said subsequent conveyors before said emptying position comprise means adapted for conveying the transport crate vertically upwards and leaving the poultry on the conveyor that ends at the emptying position so that the individual birds fall down on a conveyor or continues on the first mentioned conveyor(s) and are led to a suspension position.

According to another alternative, the apparatus according to the invention may be designed in such a way that one of said subsequent conveyors before said emptying position comprises means adapted for conveying the transport crate upwards and leaving the poultry on the conveyor that ends at the emptying position so that the individual birds fall down on a conveyor or continue on the first mentioned conveyor(s) and are led to a suspension position.

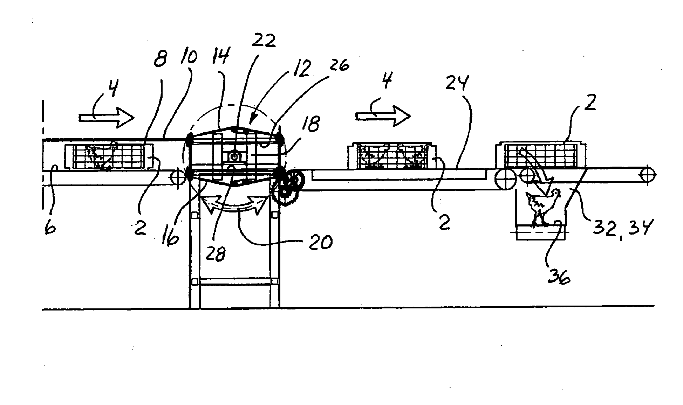

### Description of the drawing

The invention is explained in more detail below with reference to the drawing which shows a preferred embodiment of a turning unit according to the invention.

### Detailed description of the invention

The left part of the drawing shows a transport crate 2 containing live poultry that is being conveyed towards the right on a first conveyor 6, cf. arrow 4, in that an open upper side 8 of the transport crate 2 is placed immediately below a stationary cover plate 10 preventing the poultry from escaping the transport crate 2 before it reaches a turning unit 12.

The turning unit 12 consists of two identical endless belt conveyors 14 and 16 constructed on a common pivotal support rack 18, which, as indicated by the arrow 20, is designed for being capable of being turned as a whole around a rotational axis 22 that is perpendicular to the conveying direction of the first conveyor 6 and the conveying direction of a belt conveyor 24 connected thereto. The arrow 20 furthermore indicates that the turning unit can rotate in both a clockwise and counterclockwise direction, in that the belt conveyors are constructed symmetrically with horizontal conveyor belt surface parts 26 and 28 that alternately form a support surface and a cover surface for a transport crate containing poultry that has been conveyed to a point between the horizontal conveyor belt surface parts 26 and 28 in order to turn the transport crate 2, so that, as shown by 30, it is now placed with its open side turning downwards towards the upper side of the second belt conveyor 24 that conveys the transport crate 2 containing poultry further towards an emptying position 32.

The transport crate is shown with its broad side being transverse to the conveying direction, i.e. it is a short side edge of the transport crate 2 that can be seen on the drawing. At level with the emptying position 32, the transport crate 2 is only supported by opposite end parts whereby the poultry is automatically emptied into a transverse channel 34 having a conveyor 36 at the bottom that successively conveys the poultry to a suspension position in a manner not shown.

The turning unit 12 has the following function: When a transport crate 2 has been conveyed to a point between the horizontal conveyor belt surface parts 26 and 28 of the two endless belt conveyors 14 and 16 in such a way that the conveyor belt surface part 26 turns downwards and forms a cover surface for the open upper side of the transport crate 2, and that the conveyor belt surface part 28 turns upwards and forms a support surface for the transport crate 2, the turning unit 12 is activated so that it is rotated clockwise by 180° around the rotational axis 22 until the conveyor belt surface parts 26 and 28 have changed place and function, i.e. the transport crate has now been turned upside down so that its open upper side is turning downwards.

Then the transport crate 2 is led to the second belt conveyor 24, as the poultry is now confined between the upwards turning bottom side of the transport crate 2 and the belt conveyor 24. The transport crate 2 is led further towards the emptying position 32 where the poultry automatically falls down into a transverse channel 34 of a bottom conveyor 36 which conveys the conveys the poultry to a suspension position in a manner not shown.

It will be understood that the turning unit, as shown, is arranged for first being rotated by 180° in one direction, and subsequently being rotated by 180° in the opposite direction. Alternatively, the turning unit can with no problems be arranged for continuous rotation, i.e. first by 180° in one direction, and subsequently by 180° in the same direction. In both cases, the endless belt conveyors 14 and 16 may be reversible in that both belt conveyors 14 and 16, irrespective of whether the one or the other is placed at the top or at the bottom, must be arranged for conveying transport crates from the left towards the right, i.e. from an entry position via a turning position to an emptying position.

## Claims

1. An apparatus for emptying poultry from transport crates (2) and comprising at least one first conveyor (6) arranged for successively conveying transport crates (2) containing poultry to be slaughtered towards a turning position and at least one subsequent conveyor (24) arranged for successively conveying turned transport crates (2) to an emptying position (32), and from there, further to a washing and/or disinfection system, **characterised in that**, in said turning position, a turning unit (12) is provided, said unit being in the form of two endless reversible conveyors (14, 16) located at a distance from each other, and being provided with mutually parallel conveyor members (26, 28) being arranged for alternately forming a support surface and a cover surface for a transport crate (2), said turning unit (12) as a whole being arranged for being rotated around a rotational axis (22) being perpendicular to the conveying direction of said conveyors (14, 16).

2. An apparatus according to claim 1 and having a stationary cover plate (10) for transport crates (2) being conveyed on the first mentioned conveyor (6) while having their open sides turned upwards, **characterised in that** the turning unit (12) is arranged for first being rotated by 180° in one direction, and subsequently being rotated by 180° in the opposite direction.

3. An apparatus according to claim 1 and having a stationary cover plate (10) for transport crates (2) being conveyed on the first mentioned conveyor (6) while having their open sides turned upwards, **characterised in that** the turning unit (12) is arranged for first being rotated by 180° in one direction, and subsequently being rotated by 180° in the same direction.

4. An apparatus according to claim 1 and being arranged for emptying of stunned and/or killed poultry from transport crates (2), **characterised in that** said endless, reversible conveyors consist of belt conveyors (14, 16) having a number of rollers at a side turning away from said side of the conveyor, and which forms a support surface (28) and a cover surface (26) respectively for a transport crate (2).

5. An apparatus according to any of the preceding claims, **characterised in that** one of said subsequent conveyors (24) opposite said emptying position (12) is arranged for supporting opposite ends of the transport crates (2) when these with their open sides turning downwards, pass the emptying position (32) so that the individual birds fall down on a conveyor (36) that leads to a suspension position.

6. An apparatus according to any of the preceding claims, **characterised in that** one of said subsequent conveyors (24) before said emptying position (32) comprise means being adapted for conveying the transport crate vertically upwards and leaving the bird on the conveyor that ends at the emptying position (32) so that the individual birds fall down on a conveyor or continue on the first mentioned conveyor(s) and are led to a suspension position.

7. An apparatus according to any of the preceding claims, **characterised in that** one of said subsequent conveyors (24) before said emptying position (32) comprise means being adapted for successively conveying the transport crate upwards and leaving the poultry on the conveyor that ends at the emptying position so that the individual birds fall down on a conveyor or continue on the first mentioned conveyor(s) and are led to a suspension position.

## Patentansprüche

1. Vorrichtung zum Ausleeren von Geflügel aus Transportkisten (2), mit wenigstens einer ersten Fördereinrichtung (6), die ausgelegt ist, um Transportkisten (2), die zu schlachtendes Geflügel enthalten, nacheinander zu einer Drehposition zu befördern, und wenigstens einer nachfolgenden Fördereinrichtung (24), die ausgelegt ist, um gedrehte Transportkisten (2) nacheinander zu einer Ausleerposition (32) und von dort weiter zu einem Wasch- und/oder Desinfektionssystem zu befördern, **dadurch gekennzeichnet, dass** in der Drehposition eine Dreheinheit (12) vorgesehen ist, wobei die Einheit die Form von zwei Endlos-Bandzügen (14, 16), die sich in einem gegenseitigen Abstand befinden, hat und mit zueinander parallelen Förderorganen (26, 28) versehen ist, die ausgelegt sind, um abwechselnd eine Tragoberfläche und eine Abdeckoberfläche für eine Transportkiste (2) zu bilden, wobei die Dreheinheit (12) als Ganzes so angeordnet ist, dass sie um eine Drehachse (22), die zu der Förderrichtung der Bandzüge (14, 16) senkrecht ist, gedreht werden kann.

2. Vorrichtung nach Anspruch 1, die eine stationäre Abdeckplatte (10) für Transportkisten (2), die auf der ersten erwähnten Fördereinrichtung (6) befördert werden und deren offene Seiten nach oben gerichtet sind, besitzt, **dadurch gekennzeichnet, dass** die Dreheinheit (12) ausgelegt ist, um zunächst in einer Richtung um 180° gedreht zu werden und anschließend in der entgegengesetzten Richtung um 180° gedreht zu werden.

3. Vorrichtung nach Anspruch 1, die eine stationäre Abdeckplatte (10) für Transportkisten (2), die auf der ersten erwähnten Fördereinrichtung (6) befördert werden und deren offene Seiten nach oben gerichtet sind, besitzt, **dadurch gekennzeichnet, dass** die Dreheinheit (12) ausgelegt ist, um zunächst in einer Richtung um 180° gedreht zu werden und anschließend in derselben Richtung um 180° gedreht zu werden.

4. Vorrichtung nach Anspruch 1, die ausgelegt ist, um betäubtes und/oder getötetes Geflügel aus Transportkisten (2) auszuleeren, **dadurch gekennzeichnet, dass** die umkehrbaren Endlosbandzüge aus Riemenfördereinrichtungen (14, 16) bestehen, die eine Anzahl von Rollen auf einer von der Seite der Fördereinrichtung weggerichteten Seite besitzen, die eine Tragoberfläche (28) bzw. eine Abdeckoberfläche (26) für eine Transportkiste (2) bilden.

5. Vorrichtung nach einem der vorhergehenden Ansprüche, **dadurch gekennzeichnet, dass** eine der aufeinander folgenden Fördereinrichtungen (24) gegenüber der Ausleerposition (12) ausgelegt ist, um gegenüberliegende Enden der Transportkisten (2) zu tragen, wenn diese sich mit ihren offenen Seiten nach unten durch die Ausleerposition (32) bewegen, so dass die einzelnen Vögel nach unten auf eine Fördereinrichtung (26) fallen, die zu einer Aufhängungsposition führt.

6. Vorrichtung nach einem der vorhergehenden Ansprüche, **dadurch gekennzeichnet, dass** eine der aufeinander folgenden Fördereinrichtungen (24) vor der Ausleerposition (32) Mittel umfasst, die ausgelegt sind, um die Transportkiste vertikal aufwärts zu befördern und um den Vogel auf der Fördereinrichtung, die bei der Ausleerposition (32) endet, zurückzulassen, so dass die einzelnen Vögel nach unten auf eine Fördereinrichtung fallen oder ihren Weg auf der bzw. den ersten erwähnten Fördereinrichtung(en) fortsetzen und zu einer Aufhängungsposition geführt werden.

7. Vorrichtung nach einem der vorhergehenden Ansprüche, **dadurch gekennzeichnet, dass** eine der aufeinander folgenden Fördereinrichtungen (24) vor der Ausleerposition (32) Mittel umfasst, die ausgelegt sind, um die Transportkiste nacheinander aufwärts zu befördern und das Geflügel auf der Fördereinrichtung, die an der Ausleerposition endet, zurückzulassen, so dass die einzelnen Vögel auf eine Fördereinrichtung nach unten fallen oder ihren Weg auf der bzw. den ersten genannten Fördereinrichtung(en) fortsetzen und zu einer Aufhängungsposition geführt werden.

## Revendications

1. Appareil pour vider des volailles de conteneurs de transport (2) et comprenant au moins un premier convoyeur (6) agencé pour convoyer successivement des conteneurs de transport (2) contenant de la volaille à abattre vers une position de retournement et au moins un convoyeur suivant (24) agencé pour convoyer successivement les conteneurs de transport tournés (2) à une position de vidage (32), et de là, à un système de lavage et/ou de désinfection, **caractérisé en ce que**, dans ladite position de retournement, une unité de retournement (12) est prévue, ladite unité se présentant sous la forme de deux convoyeurs réversibles sans fin (14, 16) situés à une distance l'un de l'autre et présentant des éléments de convoyage mutuellement parallèles (26, 28) agencés pour former alternativement une surface de support et une surface de recouvrement pour un conteneur de transport (2), ladite unité de retournement (12) dans son ensemble étant agencée pour être amenée à tourner autour d'un axe de rotation (22) perpendiculaire à la direction de convoyage desdits convoyeurs (14, 16).

2. Appareil selon la revendication 1 et comportant une plaque de recouvrement stationnaire (10) pour les conteneurs de transport (2) convoyés sur le convoyeur (6) mentionné en premier, tout en ayant leurs côtés ouverts tournés vers le haut, **caractérisé en ce que** l'unité de retournement (12) est agencée pour être tournée d'abord de 180° dans une direction, et pour être tournée ensuite de 180° dans la direction opposée.

3. Appareil selon la revendication 1 et comportant une plaque de recouvrement stationnaire (10) pour des conteneurs de transport (2) convoyés sur le convoyeur (6) mentionné en premier tout en ayant leurs côtés ouverts tournés vers le haut, **caractérisés en ce que** l'unité de retournement (12) est agencée pour être d'abord tournée de 180° dans une direction et pour être tournée ensuite de 180° dans la même direction.

4. Appareil selon la revendication 1 et agencé pour vider des volailles étourdies et/ou tuées des conteneurs de transport (2), **caractérisé en ce que** lesdits convoyeurs réversibles sans fin sont constitués de convoyeurs à courroie (14, 16) ayant un nombre de rouleaux à un côté détourné dudit côté du convoyeur et qui forme une surface de support (28) et une surface de recouvrement (26) respectivement pour un conteneur de transport (2).

5. Appareil selon l'une des revendications précédentes, **caractérisé en ce que** l'un desdits convoyeurs suivants (24) opposé à ladite position de vidage (12) est agencé pour supporter les extrémités opposées des conteneurs de transport (2) lorsque ceux-ci, avec leurs côtés ouverts tournés vers le bas, passent la position de vidage (32) de sorte que les volailles individuelles tombent sur un convoyeur (36) qui mène à une position de suspension.

6. Appareil selon l'une des revendications précédentes, **caractérisé en ce que** l'un desdits convoyeurs suivants (24) avant ladite position de vidage (32) comprend des moyens aptes à convoyer le conteneur de transport verticalement vers le haut et à laisser la volaille sur le convoyeur qui se termine à la position de vidage (32) de sorte que les volailles individuelles tombent sur un convoyeur ou continuent sur le ou les convoyeurs mentionnés en premier et sont menés vers une position de suspension.

7. Appareil selon l'une des revendications précédentes, **caractérisé en ce que** l'un desdits convoyeurs suivants (24) avant ladite position de vidage (32) comprend des moyens aptes à convoyer successivement le conteneur de transport vers le haut et à laisser les volailles sur le convoyeur qui se terminent à la position de vidage de sorte que les volailles individuelles tombent sur un convoyeur ou bien continuent sur le ou les convoyeurs mentionnés en premier et sont menés à une position de suspension.
